# FASCICULE DE BREVET EUROPEEN

(11) **EP 4 515 197 B1**
(45) Date de publication et mention de la délivrance du brevet: **11.06.2025**
(21) Numéro de dépôt: 23730538.8
(22) Date de dépôt: 13.06.2023
(51) Int. Cl.: G01M 3/16

(54) **INSTALLATION POLYVALENTE DE DÉTECTION ET DE LOCALISATION DE FUITES DE LIQUIDE**
MEHRZWECKGERÄT ZUR ERKENNUNG UND ORTUNG VON FLÜSSIGKEITSLECKS
MULTI-PURPOSE APPARATUS FOR DETECTING AND LOCATING LEAKS OF LIQUID

(30) Priorité: 16.06.2022 FR 2205914
(43) Date de publication de la demande: 05.03.2025
(73) Titulaire: TTK, 75008 Paris (FR)
(72) Inventeur: GAUTIER, Olivier, 75006 PARIS (FR); GILLOT, Olivier, 75017 PARIS (FR)
(74) Mandataire: IPAZ
(86) Numéro de dépôt international: PCT/EP2023/065853
(87) Numéro de publication internationale: WO 2023/242218

(56) Documents cités:
- EP-A1- 2 330 397
- EP-B1- 3 066 443
- US-A1- 2011 295 504
- US-A1- 2016 156 996

## Description

### Domaine technique

La présente invention concerne un système de détection de fuites de liquide. Elle concerne aussi un procédé de détection de fuites de liquide.

### Etat de la technique antérieure

Pour détecter des fuites de liquide, sur de grandes longueurs telles que des oléoducs ou des conduites d'eau ou sur de grandes surfaces telles que des locaux industriels ou des salles informatiques, il est connu d'installer des capteurs linéaires connectés entre en eux en série pour former une ligne de détection.

Dans une telle ligne de détection, chaque capteur comprend une partie allongée qui inclut sur tout ou partie de sa longueur un moyen sensible au(x) liquide(s) à détecter. Les capteurs comprennent aussi dans leur partie allongée un bus de communication, lesquels sont connectés entre eux pour former un bus d'interrogation parcourant toute la longueur de la ligne de détection. L'extrémité de la ligne de détection est connectée avec une centrale de gestion.

Une telle ligne de détection, dans une version sensible aux hydrocarbures, est décrite dans le document EP3066443. D'autres modes de détection sont connus, par exemple avec une sensibilité aux liquides conducteurs tels que l'eau comme décrit dans les documents FR2773613 et EP09306176.

Il reste souhaitable d'améliorer ce type de détecteurs et d'installations en particulier en matière de fiabilité, de coût, de performances, pour leur permettre de couvrir des zones plus importantes, plus variées, de façon plus souple à mettre en place ou à entretenir ou à gérer, ou à remplacer.

Un objectif de l'invention est de pallier en tout ou partie les inconvénients de l'état de la technique, en particulier en améliorant leurs performances sur ces différents points ou les compromis entre ces différentes performances.

### Exposé de l'invention

Cet objectif est atteint avec un système de détection de fuites de liquide selon la revendication 1.

Selon l'invention, la pluralité de capteurs linéaires, connectés entre eux, forment un bus d'interrogation linéaire présentant une première et une deuxième extrémités, ledit bus d'interrogation linéaire étant connecté à la centrale de gestion par au moins une de ses extrémités.

La centrale de gestion est agencée pour, l'au moins une extrémité du bus d'interrogation linéaire :
- envoyer au moins un signal d'interrogation à travers le bus d'interrogation linéaire et recevoir au moins un signal de réponse par la pluralité de capteurs linéaires via ladite extrémité,
la communication entre le bus d'interrogation linéaire et la centrale de gestion étant alors à double sens.

Le système de détection de fuites de liquide peut comprendre plusieurs centrales, lesdites centrales étant connectées entre elles via un réseau sans fil (par exemple Wifi) ou via une connexion filaire (par exemple Ethernet ou Modbus).

L'avantage de ce système, est que la communication entre le bus d'interrogation linéaire et la centrale de gestion est à double sens. On entend par « double sens » le fait que des signaux d'interrogation et des signaux de réponse sont reçus par la même extrémité dudit bus d'interrogation linéaire et ce pour les deux extrémités dudit bus d'interrogation linéaire. La centrale de gestion envoie les signaux d'interrogation aux deux extrémités du bus d'interrogation linéaire une extrémité après l'autre. En effet, la centrale de gestion attend de recevoir les signaux de réponse de la première extrémité du bus d'interrogation linéaire pour envoyer les signaux d'interrogation sur la deuxième extrémité du bus d'interrogation linéaire.

La communication entre la centrale de gestion et le bus d'interrogation linéaire est avantageusement réalisée via un élément de communication compris dans chaque capteur linéaire. L'élément de communication comprend au moins un module électronique de communication et un ou plusieurs conducteurs linéaires, les capteurs linéaires connectés ensemble formant un bus de communication.

Le bus d'interrogation linéaire peut également former une ligne de détection qui peut être connectée fonctionnellement à ladite centrale de gestion directement ou indirectement.

Le système peut également comprendre au moins un accessoire correspond à une dérivation et/ou un bouchon et/ou un câble neutre.

On entend par « dérivation », un élément qui permet l'ajout d'au moins un deuxième élément, typiquement un capteur linéaire.

On entend par « bouchon », un élément de fin de ligne indiquant la fin d'un câblage en série de capteurs linéaires afin de faire la distinction avec une rupture ou discontinuité de capteur linéaire.

On entend par « câble neutre », un câble permettant de relier deux capteurs/dérivations distants sans ajout de fonctionnalité.

On entend par « élément », soit une dérivation, soit un bouchon, soit un câble neutre. Les accessoires ne sont pas limités à la liste précédemment décrite.

Plusieurs types de dérivation existent comme par exemple une dérivation droite, une dérivation de bouclage et/ou une dérivation de longueur.

On entend par « dérivation droite », une dérivation qui permet l'ajout en dérivation de capteurs linéaires et accessoires en série sans retour.

On entend par « dérivation de bouclage », une dérivation qui permet l'ajout en dérivation de boucle de capteurs linéaires et/ou accessoires (câblage avec retour à la dérivation).

On entend par « dérivation de longueur », une dérivation qui permet l'ajout en dérivation d'un capteur linéaire de longueur non prédéfinie, en série sans retour. Cette accessoire permet d'intégrer dans le système des capteurs linéaires de longueur non définie d'avance. La dérivation mesure alors la longueur du capteur linéaire. La dérivation renvoie l'information à la centrale.

Ces accessoires permettent de créer des systèmes ou réseaux uniques adaptés à la zone de détection. Le réseau est alors modulable en fonction du besoin.

Le bus d'interrogation linéaire est connecté pas ses deux extrémités à la centrale de gestion.

La centrale de gestion est agencée pour comparer au moins une première série de signaux de réponse obtenue par la première extrémité du bus d'interrogation linéaire avec :
- une deuxième série de signaux de réponse obtenue par la deuxième extrémité du bus d'interrogation linéaire,
- une liste de données caractérisant la pluralité de capteurs linéaires, ladite liste étant mémorisée par ladite centrale de gestion,
la centrale de gestion en déduisant la présence ou non d'une rupture d'un des capteurs linéaires du bus d'interrogation linéaire.

L'avantage de ce système est alors de définir via la communication entre le bus d'interrogation linéaire et la centrale de gestion si un des capteurs linéaires dudit bus d'interrogation linéaire présente une rupture ou non. Cette rupture est identifiée par la centrale de gestion en comparant les signaux de réponse reçus par chaque extrémité du bus d'interrogation linéaire.

Les signaux de réponse comprennent avantageusement, un identifiant unique permettant à la centrale de gestion d'identifier chaque capteur et/ou accessoire et par conséquent de déterminer quel capteur linéaire est en rupture ou non. Les signaux de réponse peuvent également comprendre des données caractérisant chaque capteur linéaire et/ou accessoire.

La centrale de gestion peut être agencée pour comparer une première série de signaux de réponse obtenue comprenant des données d'une première extrémité dudit bus d'interrogation linéaire et/ou des accessoires avec :
- une liste de données caractérisant la pluralité de capteurs linéaires et/ou des accessoires mémorisée par ladite centrale de gestion, et/ou
- une deuxième série de signaux de réponse obtenue par la deuxième extrémité du bus d'interrogation linéaire comprenant des données caractérisant lesdits capteurs linéaire et/ou les accessoires.

Une position de ladite rupture d'un des capteurs linéaires du bus d'interrogation linéaire peut être définie par la centrale de gestion si celle-ci déduit la présence d'une rupture d'un des capteurs linéaires du bus d'interrogation linéaire en fonction de la première et la deuxième série de signaux de réponse reçues.

En effet, en fonction de la ou des données comprises dans un signal de réponse envoyé par un capteur linéaire et/ou une dérivation vers la centrale de gestion, la centrale de gestion est agencée pour définir la position de la rupture dans le bus d'interrogation linéaire. La centrale de gestion compare les signaux de réponse reçus par chaque extrémité du bus d'interrogation linéaire pour définir la position de la rupture.

Le système peut également comprendre au moins deux dérivations, les au moins deux dérivations étant connectées sur le bus d'interrogation linéaire, un second bus d'interrogation linéaire étant formé par une seconde pluralité de capteurs linéaires connectés en série entre eux, ledit second bus d'interrogation linéaire présentant une première et une deuxième extrémité et étant connecté aux au moins deux dérivations par ses deux extrémités.

Pour chaque extrémité du second bus d'interrogation linéaire, chaque dérivation peut être agencée pour :
- envoyer au moins un signal d'interrogation à travers le second bus d'interrogation linéaire et recevoir au moins un signal de réponse par la seconde pluralité de capteurs linéaires via ladite extrémité,
chaque dérivation étant également agencée pour transmettre l'au moins un signal de réponse reçu de la seconde pluralité de capteurs linéaires à la centrale de gestion en passant par le bus d'interrogation linéaire.

L'au moins un signal de réponse peut également comprendre des données correspondant à la dérivation ou à tout autre accessoire présent dans le système.

Le nombre de dérivation n'est pas limitatif. On considère ici que le bus d'interrogation linéaire correspond à une boucle de rang un. Lorsque des dérivations sont intégrées dans cette boucle de rang un, le second bus d'interrogation linéaire connecté audites dérivations forme une boucle de rang deux. Plusieurs boucles de rang deux peuvent être intégrées sur une boucle de rang un.

Ici, chaque dérivation joue le même rôle que la centrale de gestion.

L'avantage de la dérivation est que celle-ci est configurée pour transmettre les données reçues de la ou des boucles de rang supérieur à la une ou des structures de rang inférieur ou vers la centrale de gestion directement ainsi que les données qui la concerne. La dérivation envoie alors les signaux de réponse du second bus d'interrogation et son signal de réponse à travers le bus d'interrogation linéaire, c'est-à-dire la boucle de rang un, pour que lesdits signaux de réponse atteignent l'extrémité de la centrale de gestion qui a envoyée le signal d'interrogation.
Une boucle de rang deux peut aussi être portée par une ligne de capteurs linéaires simple qui est connectée et interrogée par une seule de ses extrémités par la centrale de gestion.

Dans le cas d'une ligne simple, la centrale de gestion ne réalise pas de comparaison de signaux de réponse pour déterminer s'il y a une rupture ou non au sein de cette ligne. La centrale de gestion est capable de déterminer à partir de quel capteur linéaire il y a une coupure, les signaux de réponse s'arrêtant au dernier capteur linéaire fonctionnel.

On entend par « capteur linéaire fonctionnel », un capteur qui est alimenté de sa première extrémité à sa deuxième extrémité sans coupure. Un capteur linéaire avec une rupture et/ou coupure peut être alimenté que d'une seule extrémité. Dans ce cas, l'extrémité alimentée peut envoyer un signal de réponse en réponse au signal d'interrogation. L'utilisateur peut alors déterminer quel capteur linéaire a subi une rupture et/ou coupure et/ou dommage par exemple.

L'au moins un accessoire du système peut être agencé pour transmettre au moins un signal de réponse comprenant également une donnée propre audit accessoire.

Chaque capteur linéaire peut comprendre un membre de détection sensible aux liquides, ledit membre de détection ayant un changement de résistivité lorsque celui-ci est au contact dudit liquide.

Pour une détection d'un liquide conducteur comme par exemple une détection eau/acide base, la résistivité du membre de détection diminue lors d'un contact avec ledit liquide. Pour une détection d'un liquide non conducteur de type hydrocarbure ou solvant par exemple, la résistivité du membre de détection augmente lors d'un contact avec ledit liquide.

Les conducteurs linéaires de retour peuvent typiquement correspondre à un fil de retour de mesure et un fil de continuité.

La pluralité de capteurs linéaires du bus d'interrogation linéaire peut correspondre à une pluralité de capteurs linéaires sensibles aux liquides conducteurs et/ou sensibles aux liquides non-conducteurs et/ou sensibles aux hydrocarbures.

Il en va de même en ce qui concerne le second bus d'interrogation linéaire. Les types de capteurs linéaires peuvent être mixés en fonction de la zone de pose et du besoin de détection.

En fonction de la ou les données comprises dans un signal de réponse envoyé par un capteur linéaire et/ou un accessoire vers la centrale de gestion, la centrale de gestion est agencée pour définir la position de la détection de fluide par un capteur linéaire dans le bus d'interrogation linéaire. La centrale de gestion compare les signaux de réponse reçus par chaque extrémité du bus d'interrogation linéaire et/ou par chaque accessoire pour définir la position du capteur en question.

Suivant encore un autre aspect de l'invention, il est proposé un procédé de détection de fuites de liquide selon la revendication 9.

Selon l'invention, la pluralité de capteurs linéaires, connectés entre eux, forment un bus d'interrogation linéaire présentant une première et une deuxième extrémités, ledit bus d'interrogation linéaire étant connecté à la centrale de gestion par au moins une de ses extrémités,
pour l'au moins une extrémité du bus d'interrogation linéaire, le procédé comprenant les étapes suivantes :
   - envoi d'au moins un signal d'interrogation à travers le bus d'interrogation linéaire et réception d'au moins un signal de réponse par la pluralité de capteurs linéaires via ladite extrémité,
la communication du premier bus d'interrogation linéaire à travers la pluralité de capteurs linéaire étant alors à double sens.

Le bus d'interrogation linéaire est connecté par ses deux extrémités.

Le procédé comprend les étapes suivantes :
- comparaison par la centrale de gestion d'au moins une première série de signaux de réponse obtenue par la première extrémité du premier bus d'interrogation linéaire avec :
   - une deuxième série de réponses obtenue de la pluralité de capteurs linéaires par la deuxième extrémité du premier bus d'interrogation linéaire, et/ou,
   - une liste de données caractérisant la pluralité de capteurs linéaires, ladite liste étant mémorisée par ladite centrale de gestion,
- déduction par la centrale de gestion de la présence ou non d'une rupture du premier bus d'interrogation linéaire.

Le système peut également comprendre au moins un accessoire correspondant à une dérivation et/ou un bouchon et/ou un câble neutre, le procédé pouvant également comprendre les étapes suivantes :
- comparaison par la centrale de gestion d'au moins une première série de signaux de réponse obtenue comprenant des données d'une première extrémité dudit bus d'interrogation linéaire et/ou accessoires avec :
   - une liste de données caractérisant la pluralité de capteurs linéaires et/ou des accessoires mémorisée par ladite centrale de gestion, et/ou
   - une deuxième série de signaux de réponse obtenue par la deuxième extrémité du bus d'interrogation linéaire comprenant des données caractérisant lesdits capteurs linéaire et/ou les accessoires.

Le procédé peut également comprendre l'étape suivante :
- détermination d'une position de ladite rupture d'un des capteurs linéaires du bus d'interrogation linéaire par la centrale de gestion si celle-ci déduit la présence d'une rupture d'un des capteurs linéaires du bus d'interrogation linéaire en fonction de la première et la deuxième série de signaux de réponse reçues.

Le système peut également comprendre au moins deux dérivations, les au moins deux dérivations étant connectées sur le bus d'interrogation linéaire, un second bus d'interrogation linéaire étant formée par une seconde pluralité de capteurs linéaires connectés en série entre eux, ledit second bus d'interrogation linéaire présentant une première et une deuxième extrémité et étant connecté aux au moins deux dérivations par ses deux extrémités,
pour chaque extrémité du bus second d'interrogation linéaire et pour chaque dérivation, le procédé peut comprendre les étapes suivantes:
- envoi d'au moins un signal d'interrogation à travers le second bus d'interrogation linéaire et réception d'au moins un signal de réponse par la seconde pluralité de capteurs linéaires via ladite extrémité,
- transmission de l'au moins un signal de réponse reçu de la seconde pluralité de capteurs linéaires à la centrale de gestion en passant par le bus d'interrogation linéaire.

Le procédé peut également comprendre l'étape suivante :
- transmission d'au moins un signal de réponse comprenant également une donnée propre audit accessoire par ledit accessoire.

Suivant encore un autre aspect de l'invention, il est proposé un produit programme d'ordinateur comprenant des instructions qui, lorsque le programme est exécuté par un ordinateur, conduisent celui-ci à mettre en œuvre les étapes du procédé selon l'invention.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
**[****Fig.1****]** : la Fig.1 est un schéma symbolique qui illustre un exemple d'élément de détection d'un capteur linéaire utilisable dans le cadre de l'invention, ici du type à détection eau/acide ;
**[****Fig.2****]** : la Fig.2 est un schéma symbolique qui illustre un exemple de capteur linéaire utilisable dans le cadre de l'invention, et incluant un élément de détection de la Fig.1, du même type ou fonctionnant selon un autre mode de détection ;
**[****Fig.3****]** : la Fig.3 est un schéma symbolique qui illustre un exemple de ligne de détection, incluant le capteur linéaire de la Fig.2, ici raccordée en ligne simple et sans circuit aval ;
**[****Fig.4****]** : la Fig.4 est un schéma symbolique qui illustre un premier exemple de mode de réalisation de l'invention, utilisant par exemple des capteurs linéaires tels que celui de la Fig.2, formant une boucle simple ;
**[****Fig.5****]** : la Fig.5 est un schéma symbolique qui illustre un deuxième exemple de mode de réalisation de l'invention, dans lequel la boucle de la Fig.4 comprend des nœuds de dérivation qui portent deux boucles secondaires ;
**[****Fig.6****]** : la Fig.6 est un schéma symbolique qui illustre un troisième exemple de mode de réalisation de l'invention, dans lequel les boucles secondaires de la Fig.5 portent elles-mêmes des circuits aval, comprenant une boucle de rang 3 et deux lignes simples de rang 3, dont l'une porte elle-même en aval deux boucles de rang 4.

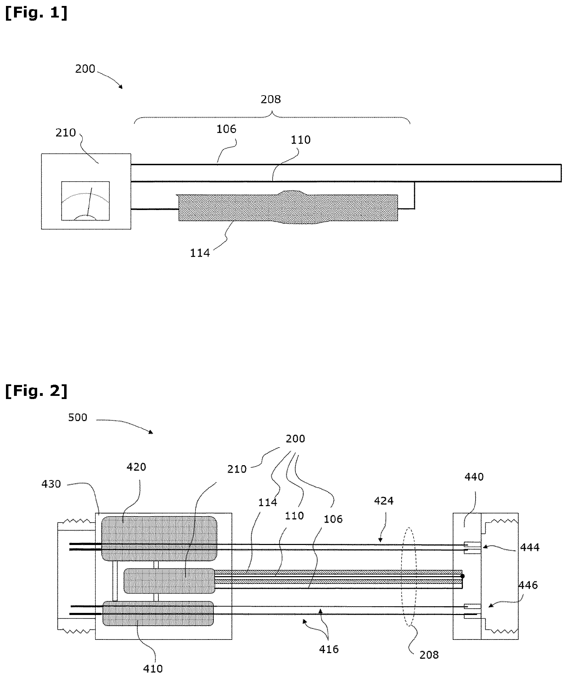

Les Fig.1 et Fig.2 illustrent un exemple de constitution d'un capteur linéaire utilisable dans le cadre de l'invention.

Cependant, d'autres types de capteurs linéaires montés en série sont utilisables dans le cadre de l'invention, avec tous types de modes de détection, et tous de types de bus de communication et/ou d'alimentation.

Des capteurs linéaires différents les uns des autres peuvent aussi être utilisés ensemble dans le cadre de l'invention, dès lors que leurs bus de communication sont compatibles entre eux et avec la centrale de gestion.

Dans cet exemple, chaque capteur linéaire comprend un élément détecteur 200, illustré en Fig.1. Cet élément détecteur comprend un module électronique de gestion 210, qui est connecté à l'extrémité dite proximale d'un membre de détection 208 allongé sur toute la longueur du capteur linéaire 500. Ce membre de détection 208 forme un faisceau qui comprend deux conducteurs métalliques 106 et 110 et deux conducteurs de détection 114, qui sont électriquement connectés ensemble à l'extrémité opposée, dite distale. Cet élément détecteur est applicable dans la détection eau/acide base par exemple. Dans d'autres types de détection tels que la détection hydrocarbure par exemple, l'élément détecteur diffère.

Comme illustré en Fig.2, en plus de l'élément détecteur 200, le capteur linéaire 500 comprend un élément de communication qui inclut d'une part au moins un conducteur de communication 416 et deux conducteurs d'alimentation 424 courant sur toute la longueur du capteur linéaire 500. A l'extrémité du capteur linéaire 500, un connecteur 430 renferme le module électronique de gestion 210. Il comprend aussi un module de communication 410 et un module d'alimentation 420, qui sont connectés aux conducteurs de communication 416 et d'alimentation 424 et forment avec eux un bus de communication alimenté. Ce bus de communication alimenté comprend deux conducteurs de communication 416 (l'une des deux étant ici représenté en pointillés et l'autre n'étant pas représenté), chacun d'eux étant utilisé pour la communication dans les deux sens.

Chaque capteur linéaire 500 porte à son extrémité distale un connecteur 440. Celui-ci comprend des ports de connexion 444 et 446 qui permettent de connecter l'extrémité distale de ses conducteurs d'alimentation 424 et respectivement de communication 416 à l'extrémité proximale d'un autre capteur linaire du même type. Les positions des connecteurs 430 et 440 ne sont pas limitatives. Dans certains modes de réalisation, le connecteur 440 est positionné sur l'extrémité proximale du capteur linéaire 500 et le connecteur 430 sur l'extrémité distale du capteur linéaire 500 par exemple.

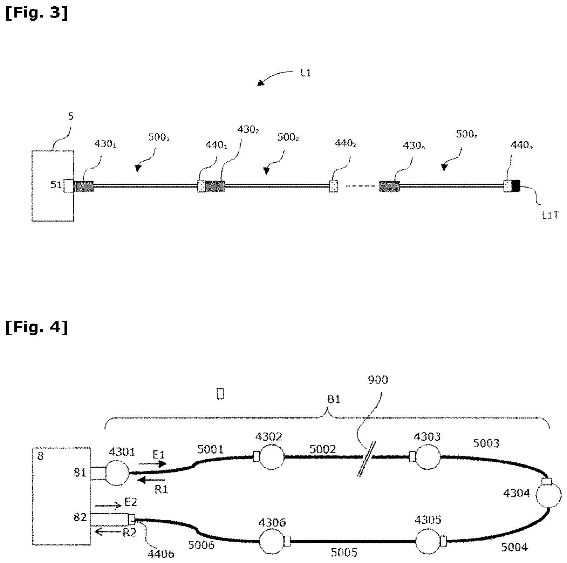

Selon les figures 2 et 3, dans chaque capteur linéaire, le module de communication 410 reçoit le signal d'interrogation en provenance de la centrale de gestion positionnée en amont, par un port de communication 436 de son connecteur proximal 430. Il interroge alors son module de gestion 210 pour connaître la présence éventuelle d'une rupture. Il renvoie ce signal de réponse en amont vers la centrale de gestion, et transmet un signal d'interrogation au capteur linéaire suivant. Quand il reçoit de l'aval un signal de réponse en provenance de l'un des capteurs linéaires suivants, il le transmet vers l'amont à destination de la centrale de gestion.

La centrale interroge ainsi tous les capteurs de la ligne de détection, et reçoit leurs signaux de réponse à tous par son port de communication ou port d'interrogation 51.

Comme illustré aussi en Fig.3, plusieurs capteurs 500(1) à 500(n) de ce type peuvent être connectés en série pour former une ligne de détection L1. Dans cet exemple la ligne de détection L1 est connectée par son extrémité proximale 430(1) à un port de communication 51 de la centrale de gestion 5, et reçoit à son extrémité distale 440n un bouchon L1T.

Dans cette configuration, ici appelé en "ligne simple", la centrale de gestion 5 envoie à l'ensemble des capteurs linéaires de la ligne simple ainsi qu'aux accessoires (ici le bouchon), un signal d'interrogation, qui est reçu par chaque module de communication 410 de chaque connecteur proximal et par chaque accessoire. Si aucune rupture existe sur la ligne simple, l'ensemble des capteurs linéaires et accessoires répondent au signal d'interrogation en envoyant un signal de réponse à la centrale de gestion. Si une rupture existe sur la ligne simple, l'ensemble des capteurs linéaires correctement alimenté répondent au signal d'interrogation envoyé par la centrale.

En effet, si par exemple une rupture existe sur le capteur 500(7), l'ensemble des capteurs linéaires positionnés avant ledit capteur linéaire 500(7) répondent au signal d'interrogation de la centrale de gestion. Si le capteur 500(7) est alimenté sur son extrémité distale 430(7), alors ledit capteur linaire 500(7) répond également au signal d'interrogation. Aucun signal de réponse ne peut être envoyé par les capteurs linéaires suivants ledit capteur linéaire 500(7). La centrale de gestion détermine alors que la rupture se situe sur le capteur linéaire 500(7).

Il est à noter que les capteurs linéaires présentés ici à titre d'exemple portent leurs modules électroniques à une extrémité. Mais leur structure peut aussi être différente voire variée, par exemple avec l'électronique au milieu de la longueur, ou aux deux extrémités. Les conducteurs de détection 114 sont ici présentés à titre d'exemple comme présent sur toute la longueur du capteur linaire, mais il peut aussi présenter une forme ou une répartition différente voire variée, sans sortir du cadre de l'invention.

En Fig.4 est illustré un premier exemple de mode de réalisation de l'invention, dans lequel un ensemble de capteurs 5001 à 5006 (ici six à titre d'exemple mais ce nombre n'est pas limité) sont connectés entre eux en série, pour former une boucle, ici appelée boucle simple qui est raccordée par ses deux extrémités 4301 et 4406 à la centrale de gestion 8. Cette boucle correspond à une boucle de niveau un. Cette boucle forme également un bus d'interrogation linéaire.

Cette boucle utilise par exemple des capteurs linéaires tels que celui de la Fig.2, sans que cela ne soit en rien limitatif des types de capteurs linéaires pouvant être mis en œuvre.

La centrale de gestion 8 porte un premier port d'interrogation ou port de communication 81 et un deuxième port d'interrogation ou port de communication 82. Sur le premier port d'interrogation 81 est connecté le premier capteur linéaire 5001 du bus d'interrogation linéaire, au moyen de son connecteur proximal 4301. Le dernier capteur linéaire 5006 est connecté par son connecteur distal 4406 au deuxième port d'interrogation 82.

Le premier port d'interrogation 81 de la centrale de gestion 8 interroge tous les capteurs linéaires de la boucle B1 en émettant un premier signal d'interrogation E1. Il reçoit une première série de signaux de réponses R1 renvoyés par l'ensemble des capteurs linéaires, en réponse à ce premier signal d'interrogation E1. Une fois que l'ensemble des signaux de réponse sont reçus par le port d'interrogation 81, le deuxième port d'interrogation 82 de la centrale de gestion 8 interroge lui aussi tous les capteurs de la boucle B1 en émettant un deuxième signal d'interrogation E2. Il reçoit une deuxième série de signaux de réponse R2 renvoyés par l'ensemble des capteurs linéaires de la boucle B1, en réponse à ce signal d'interrogation E2.

Les signaux d'interrogation E1, E2 et signaux de réponse R1, R2 sont transmis par chacun des capteurs linéaires de la boucle B1 de façon indépendante l'une de l'autre. La boucle B1 est parcourue par deux interrogations/réponses : d'une part E1-R1, et d'autre part E2-R2.

La centrale de gestion 8 compare alors les signaux de réponse des deux extrémités. Dans le cas où aucune rupture ou défaillance n'est présente sur le bus d'interrogation linéaire, la centrale ne trouve aucune différence lors de la comparaison des signaux de réponse.

Dans le cas où une rupture 900 ou une défaillance se produit sur l'un des capteurs linéaires (ici 5002) du bus d'interrogation linéaire, le capteur linéaire en question 5002 est capable de répondre soit à l'amont, soit à l'aval, le module de gestion de celui-ci restant alimenté par l'amont ou l'aval de la boucle (cas d'une seule rupture). Le premier port d'interrogation 81 reçoit donc un signal de réponse des capteurs linéaires situés en amont, ici le signal de réponse du capteur linéaire 5001 et, si le capteur linéaire 5002 est alimenté par l'amont selon le sens de l'interrogation E1, le signal de réponse du capteur linéaire 5002. Les suivants ne reçoivent pas le premier signal d'interrogation E1, et ne peuvent pas y répondre. Une fois que l'ensemble des signaux de réponse sont reçus par le port d'interrogation 81, le deuxième port d'interrogation 82 interroge depuis l'autre extrémité de la boucle B1 les capteurs linéaires du bus d'interrogation linéaire, et reçoit les signaux de réponse des capteurs linéaires qui sont en amont de la rupture/défaillance 900 par rapport au sens du signal d'interrogation E2. Il reçoit donc des signaux de réponse de la part de tous les autres capteurs linéaires suivant 5006, 5005, 5004, et 5003 de cette même boucle B1. Et si le capteur linéaire 5002 est alimenté par l'amont selon le sens d'interrogation E2, le signal de réponse du capteur linéaire 5002. Le bus d'alimentation est configuré pour que chaque module 4301 à 4306 soit alimenté aussi bien par l'amont que par l'aval.

Ainsi, contrairement au mode de réalisation de la Fig.3, la centrale de gestion 8 qui interroge le bus d'interrogation linéaire qu'elle voit en aval reçoit des signaux de réponse de tous les capteurs linéaires encore en état de fonctionnement.

En outre, le bus d'interrogation double E1-R1 (flèches pleines) et E2-R2 (flèches évidées) est organisé pour que la centrale de gestion 8 puisse identifier le capteur linéaire à l'origine de chaque réponse. Par exemple, quel que soit le signal d'interrogation E1 ou E2 que la centrale de gestion reçoit, les modules de communication des capteurs linéaires 5001 à 5006 sont agencés pour émettre leurs signaux de réponse avec au moins une donnée d'identification, qui permet à la centrale 8 d'identifier le capteur à l'origine de chaque réponse.

Dans le cas d'une rupture ou défaillance, par exemple déduite par la centrale de gestion 8 du fait qu'elle ne reçoit pas assez de signaux de réponse ou qu'elle n'en reçoit qu'un seul de chaque capteur linéaire au lieu de deux, la centrale de gestion 8 va identifier quels sont les signaux de réponse qui arrivent par chacun de ses ports d'interrogation 81 et 82. Dans l'exemple de la rupture 900 de la Fig.4, le premier port d'interrogation 81 reçoit le signal de réponse du premier capteur linéaire 5001, si le capteur linéaire 5002 est alimenté par l'amont selon le sens de l'interrogation E1, le signal de réponse du capteur linéaire 5002. Le deuxième port d'interrogation 82 reçoit les signaux de réponse des capteurs linéaires 5003 à 5006 et si le capteur linéaire 5002 est alimenté par l'amont selon le sens de l'interrogation E2, le signal de réponse du capteur linéaire 5002. La centrale de gestion 8 compare les signaux de réponse reçus par chaque port d'interrogation de la centrale de gestion et en déduit que le capteur linéaire défaillant est le capteur linéaire situé entre le dernier capteur linéaire du premier bus E1-R1 et le dernier capteur linéaire du deuxième bus E2-R2, et donc qu'il s'agit du capteur linéaire 5002. En cas de ruptures ou défaillances multiples, la centrale de gestion 8 détermine quelle portion de la boucle B1 ne répond pas sur le même principe.

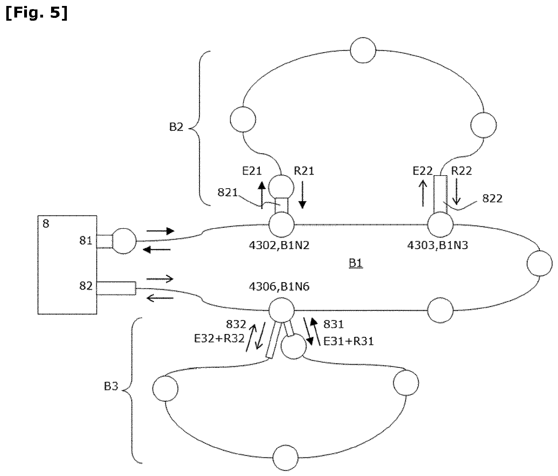

En Fig.5 est illustré un deuxième exemple de mode de réalisation de l'invention, qui ne sera décrit que dans ses différences.

Dans cet exemple, le bus d'interrogation linéaire connecté à la centrale de gestion 8 par ses deux ports d'interrogation ou ports de communication 81, 82 comprend trois accessoires de type dérivation B1N2, B1N3 et B1N6, qui reçoivent deux boucles secondaires.

Ces dérivations B1N2, B1N3 et B1N6 sont formées par un module électronique de dérivation, qui est agencé pour recevoir une connexion d'un ou plusieurs autres capteurs linéaires, potentiellement du même type mais pas obligatoirement.

Dans cet exemple, chacune de ces dérivations sont connectées au niveau de l'une des extrémités d'un capteur linéaire . Le connecteur 4302 est ainsi connecté à une dérivation B1N2, le connecteur 4303 à une dérivation B1N3, et le connecteur 4306 à une dérivation B1N6.

Au sein d'un capteur linéaire, chacun du ou des modules de dérivation est fonctionnellement connecté au module de communication 410, qui lui transmet les signaux d'interrogation E1, E2 qu'il reçoit, en plus de les transmettre au capteur linéaire adjacent. Le module de dérivation est agencé pour transmettre le signal d'interrogation vers un capteur linéaire dérivé par l'intermédiaire d'une boite de dérivation.

Ainsi, le bus d'interrogation linéaire (dite boucle de rang un ou boucle B1) porte une dérivation dite simple B1N2, muni d'une boite de dérivation 821 sur laquelle est connectée l'une des extrémités d'un second bus d'interrogation linéaire (dite boucle de rang deux ou boucle B2). La boucle primaire B1 porte également une deuxième dérivation simple B1N3, muni d'une deuxième boite de dérivation 822 sur laquelle est connectée la deuxième extrémité de la boucle secondaire B2. Chaque dérivation et/ou accessoire du réseau envoie un signal de réponse comprenant des données propres à ladite dérivation et/ou accessoire en même temps que celle-ci et/ou celui-ci transfère les signaux de réponses du second bus d'interrogation linéaire vers la centrale de gestion.

Par cette boite de dérivation 821, le module de dérivation de la dérivation B1N2 répercute sous la forme de premiers signaux d'interrogation E21 dans la boucle B2, les premiers signaux d'interrogation E1 reçus dans le connecteur 4302 envoyés par le port d'interrogation 81. La dérivation B1N2 est aussi agencée pour recevoir par sa boite de dérivation 821 les signaux de réponse R21 envoyés par les capteurs linéaires de la boucle B2 en réponse aux signaux d'interrogation E21, et les répercuter dans la boucle primaire B1 sous la forme de signaux de réponse R1. Les signaux de réponse R21 sont transmis au port d'interrogation 81 de la centrale de gestion qui a émis les signaux d'interrogation.

Par cette boite de dérivation 822, le module de dérivation de la dérivation B1N3 répercute sous la forme de premiers signaux d'interrogation E22 dans la boucle B2, les premiers signaux d'interrogation E2 reçus dans le connecteur 4303 envoyés par le port d'interrogation 82. La dérivation B1N3 est aussi agencée pour recevoir par sa boite de dérivation 822 les signaux de réponse R22 envoyés par les capteurs linéaires de la boucle B2 en réponse aux signaux d'interrogation E22, et les répercuter dans la boucle primaire B1 sous la forme de signaux de réponse R2. Les signaux de réponse R22 sont transmis au port d'interrogation 82 de la centrale de gestion qui a émis les signaux d'interrogation.

Cette boucle primaire B1 porte encore une troisième dérivation B1N6, dit double. Cette dernière fonctionne de la même façon que les dérivations simples, à la différence qu'elle réunit et gère à la fois une première boite de dérivation 831 et une deuxième boite de dérivation 832 sur lesquelles sont connectées les deux extrémités d'une deuxième boucle secondaire B3 (elle-même aussi de rang deux). Chacune de ces boites de dérivation 831, 832 lui transmette des premiers et deuxièmes signaux d'interrogation E31 et E32, et en reçoit des premiers et deuxièmes signaux de réponse R31 et R32.

Comme on le comprend, les premières et deuxièmes boites de dérivation de ladite dérivation B1N6 de la boucle B1 sont vues par les boucles B2, B3 de façon similaire aux ports d'interrogation 81, 82 de la centrale de gestion 8.

La dérivation B1N6 est donc agencée pour recevoir par sa boite de dérivation 831 les signaux de réponse R31 envoyés par les capteurs linéaires de la boucle B3 en réponse aux signaux d'interrogation E31, et les répercuter dans la boucle primaire B1 sous la forme de signaux de réponse R1. Les signaux de réponse R31 sont transmis au port d'interrogation 81 de la centrale de gestion qui a émis les signaux d'interrogation.

La dérivation B1N6 est également agencée pour recevoir par sa boite de dérivation 822 les signaux de réponse R32 envoyés par les capteurs linéaires de la boucle B3 en réponse aux signaux d'interrogation E32, et les répercuter dans la boucle primaire B1 sous la forme de signaux de réponse R1. Les signaux de réponse R32 sont transmis au port d'interrogation 82 de la centrale de gestion qui a émis les signaux d'interrogation.

On voit qu'il est ainsi possible de réaliser de nombreuses topologies, combinant des boucles de différents rangs, de façon très souple, aussi bien vis-à-vis des zones à surveiller que du point de vue des modifications d'installation en cours de vie. Ces avantages sont obtenus tout en bénéficiant de la redondance et de la localisation de défaillance que permet le fonctionnement individuel de chaque boucle, dont toutes les informations remontent finalement à la centrale de gestion 8. En effet, la détection de défaillance ou de rupture fonctionne sur le principe présenté dans le mode de réalisation de la figure 4. Si une rupture est par exemple détectée dans la boucle secondaire B3, celle-ci est localisée via les réponses aux différentes interrogations envoyées par la centrale 8.

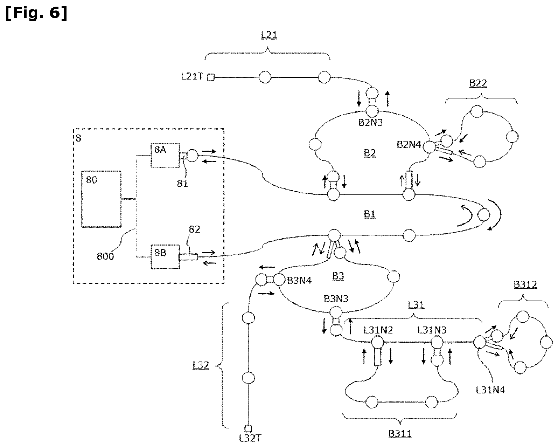

En Fig.6 est illustré un troisième exemple de mode de réalisation de l'invention, qui ne sera décrit que dans ses différences.

Dans cet exemple, la boucle secondaire B2 porte elle-même une autre boucle de niveau trois B22, dite de rang trois, au niveau d'un nœud de dérivation double B2N4 et qui fonctionne de la même façon vis-à-vis de sa boucle amont B2 que cette dernière vis-à-vis de sa propre boucle amont B1.

En outre, cette boucle secondaire B2 porte, sur une dérivation simple B2N3, une ligne de détection L21. Celle-ci présente la forme d'une ligne simple, terminée par un bouchon L21T, par exemple de façon similaire à celle de la Fig.3.

L'autre boucle secondaire B3 porte elle-même deux lignes de détection L31 et L32, dites de rang trois également. La ligne de détection L32 est une ligne simple comprenant un bouchon L32T comme présenté à la figure 3. L'autre ligne de détection L31 est ici aussi appelée ligne simple parce qu'elle n'est connectée qu'à un seul port de dérivation B3N3 de la boucle B3.

A son extrémité aval, cette ligne de détection simple L31 sur la boucle B3 porte cependant une dérivation double L31N4, sur lequel sont connectées les deux extrémités d'une boucle B312 de rang quatre, et qui fonctionne de façon similaire aux boucles B3 et B22. Cette ligne de détection simple L31 de la boucle B3 porte en outre deux dérivations simples L31N2 et L31N3, sur lesquels sont connectées une autre boucle B311.

Comme on le comprend, chacune des structures de rang supérieur, qu'elle soit boucle ou ligne simple, reçoit les signaux d'interrogation depuis sa structure de rang inférieur et les transmet à sa ou ses structures de rang encore supérieur, et ainsi de suite jusqu'aux structures de dernier rang. En sens inverse, elle reçoit les signaux de réponse correspondants depuis sa ou ses structures de rang supérieur et les répercute à sa structure de rang inférieur, et ainsi de suite jusqu'à ce que ces réponses parviennent à la centrale de gestion 8. On notera que les "rangs" sont ici définis de façon croissante depuis la centrale de gestion 8.

Dans le cas d'une structure de rang inférieur formée par une ligne de détection simple, comme la ligne de détection simple L31 de rang trois, ses dérivations (simple ou double) sont agencées pour transmettre à la structure de rang supérieur les signaux d'interrogation de façon dédoublée lorsqu'elles sont connectées à une boucle, comme par exemple la dérivation double L31N4 qui porte la boucle B312 de rang quatre. De façon similaire, les dérivations simples L31N2 et L31N3 sont agencées pour recevoir les signaux d'interrogation qui parcourt la ligne de détection simple L31, et la transmettre à la structure de rang supérieur de façon dédoublée aux deux extrémités de la boucle B311 de rang quatre.

La détection de défaillances ou de ruptures fonctionne sur le principe présenté dans le mode de réalisation de la figure 4. Si une rupture est par exemple détectée dans la boucle secondaire B3, celle-ci est localisée via les signaux de réponse en réponse aux différents signaux d'interrogation envoyés par la centrale de gestion 8.

Ainsi, on voit qu'il est possible de varier plus encore les topologies, par exemple en panachant des boucles et des lignes simples au sein d'une même installation gérée par une même centrale. Cela permet de mieux adapter l'installation à la forme de la zone à surveiller, et aussi de limiter les coûts et la complexité des installations.

En Fig.6, on notera que la centrale de gestion 8 (en pointillés) est formée par deux sous-unités 8A et 8B, qui portent chacune un premier et deuxième ports d'interrogation ou ports de communication 81, 82. Ces deux sous-unités sont reliées ensemble et/ou avec une unité centrale 80, par exemple par un réseau numérique d'un type connu, par lequel les deux sous-unités font transiter leurs informations et/ou synchronisations. Il est ainsi possible de réaliser une boucle primaire B1 dont les deux extrémités sont plus ou moins éloignées l'une de l'autre, tout en gardant la redondance et la localisation de panne propres à la boucle de détection.

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

Typiquement au moins un des moyens du système selon l'invention précédemment décrits, de préférence chacun des moyens du système selon l'invention précédemment décrit sont des moyens techniques.

Typiquement, chacun des moyens du système selon l'invention précédemment décrits peuvent comprendre au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

## Revendications

1. Système de détection de fuites de liquide, comprenant une centrale de gestion (8) et une pluralité de capteurs linéaires (500) comprenant chacun une première extrémité et une deuxième extrémité et qui sont connectés entre eux en série,
la pluralité de capteurs linéaires (5001 à 5006), connectés entre eux, forment un bus d'interrogation linéaire présentant une première et une deuxième extrémités,
la centrale de gestion est agencée pour, l'au moins une extrémité du bus d'interrogation linéaire:
- envoyer au moins un signal d'interrogation (E1, E2) à travers le bus d'interrogation linéaire et recevoir au moins un signal de réponse (R1, R2) par la pluralité de capteurs linéaires (5001 à 5006) via ladite extrémité,
la communication entre le bus d'interrogation linéaire et la centrale de gestion étant alors à double sens,
**caractérisé en ce que** le bus d'interrogation linéaire est connecté par ses deux extrémités (51,52) à la centrale de gestion,
et **en ce que** la centrale de gestion est également agencée pour comparer au moins une première série de signaux de réponse obtenue par la première extrémité du bus d'interrogation linéaire avec :
• une deuxième série de signaux de réponse obtenue par la deuxième extrémité du bus d'interrogation linéaire, et/ou,
• une liste de données caractérisant la pluralité de capteurs linéaires, ladite liste étant mémorisée par ladite centrale de gestion,
la centrale de gestion en déduisant la présence ou non d'une rupture d'un des capteurs linéaires du bus d'interrogation linéaire.

2. Système selon la revendication 1,
**caractérisé en ce que** le système comprend au moins un accessoire correspondant à une dérivation et/ou un bouchon et/ou un câble neutre.

3. Système selon la revendication 2, **caractérisé en ce que** la centrale de gestion est agencée pour comparer une première série de signaux de réponse obtenue comprenant des données d'une première extrémité dudit bus d'interrogation linéaire et/ou des accessoires avec :
- une liste de données caractérisant la pluralité de capteurs linéaires et/ou des accessoires mémorisée par ladite centrale de gestion, et/ou
- une deuxième série de signaux de réponse obtenue par la deuxième extrémité du bus d'interrogation linéaire comprenant des données caractérisant lesdits capteurs linéaire et/ou les accessoires.

4. Système selon la revendication 1, **caractérisé en ce qu'**une position de ladite rupture d'un des capteurs linéaires du bus d'interrogation linéaire est définie par la centrale de gestion si celle-ci déduit la présence d'une rupture d'un des capteurs linéaires du bus d'interrogation linéaire en fonction de la première et la deuxième série de signaux de réponse reçues.

5. Système selon l'une quelconque des revendications 2 à 4, **caractérisé en ce que** le système comprend également au moins deux dérivations (B1N2, B1N3, B1N6), les au moins deux dérivations (B1N2, B1N3, B1N6) étant connectées sur le bus d'interrogation linéaire, un second bus d'interrogation linéaire (B2, B3) étant formé par une seconde pluralité de capteurs linéaires connectés en série entre eux, ledit second bus d'interrogation linéaire présentant une première et une deuxième extrémités et étant connecté aux au moins deux dérivations (B1N2, B1N3, B1N6) par ses deux extrémités,
pour chaque extrémité du second bus d'interrogation linéaire, chaque dérivation est agencée pour :
- envoyer au moins un signal d'interrogation (E1, E2) à travers le second bus d'interrogation linéaire et recevoir au moins un signal de réponse (R1, R2) par la seconde pluralité de capteurs linéaires via ladite extrémité,
chaque dérivation étant également agencée pour transmettre l'au moins un signal de réponse reçu de la seconde pluralité de capteurs linéaires à la centrale de gestion (8) en passant par le bus d'interrogation linéaire (B1).

6. Système selon l'une quelconque des revendications 2 à 5, **caractérisé en ce que** l'au moins un accessoire du système est agencé pour transmettre au moins un signal de réponse comprenant également une donnée propre audit accessoire.

7. Système selon l'une quelconque des revendications précédentes, **caractérisé en ce que** chaque capteur linéaire comprend un membre de détection (208) sensible aux liquides, ledit membre de détection ayant un changement de résistivité lorsque celui-ci est au contact dudit liquide.

8. Système selon l'une quelconque des revendications précédentes, **caractérisé en ce que** la pluralité de capteurs linéaires du bus d'interrogation linéaire correspond à une pluralité de capteurs linéaires sensibles aux liquides conducteurs et/ou sensibles aux liquides non-conducteurs et/ou sensibles aux hydrocarbures.

9. Procédé de détection de fuites de liquide dans un système, le système comprenant une centrale de gestion (8) et une pluralité de capteurs linéaires (500) comprenant chacun une première extrémité et une deuxième extrémité et qui sont connectés entre eux en série,
la pluralité de capteurs linéaires (5001 à 5006), connectés entre eux, forment un bus d'interrogation linéaire présentant une première et une deuxième extrémités,
pour l'au moins une extrémité du bus d'interrogation linéaire, le procédé comprenant les étapes suivantes :
- envoi d'au moins un signal d'interrogation (E1, E2) à travers le bus d'interrogation linéaire et réception d'au moins un signal de réponse (R1, R2) par la pluralité de capteurs linéaires via ladite extrémité,
la communication du bus d'interrogation linéaire à travers la pluralité de capteurs linéaire étant alors à double sens,
**caractérisé en ce que** le bus d'interrogation linéaire est connecté par ses deux extrémités (51,52) à la centrale de gestion,
et **en ce que** le procédé comprend également les étapes suivantes :
- comparaison par la centrale de gestion d'au moins une première série de signaux de réponse obtenue par la première extrémité du bus d'interrogation linéaire avec :
• une deuxième série de réponses obtenue de la pluralité de capteurs linéaires par la deuxième extrémité du bus d'interrogation linéaire, et/ou,
• une liste de données caractérisant la pluralité de capteurs linéaires, ladite liste étant mémorisée par ladite centrale de gestion,
- déduction par la centrale de gestion de la présence ou non d'une rupture du bus d'interrogation linéaire.

10. Procédé selon la revendication 9, **caractérisé en ce que** le système comprend au moins un accessoire correspondant à une dérivation et/ou un bouchon et/ou un câble neutre, le procédé comprenant également les étapes suivantes :
- comparaison par la centrale de gestion d'au moins une première série de signaux de réponse obtenue comprenant des données d'une première extrémité dudit bus d'interrogation linéaire et/ou accessoires avec :
• une liste de données caractérisant la pluralité de capteurs linéaires et/ou des accessoires mémorisée par ladite centrale de gestion, et/ou
• une deuxième série de signaux de réponse obtenue par la deuxième extrémité du bus d'interrogation linéaire comprenant des données caractérisant lesdits capteurs linéaire et/ou les accessoires.

11. Procédé selon la revendication 9, **caractérisé en ce que** le procédé comprend également l'étape suivante :
- détermination d'une position de ladite rupture d'un des capteurs linéaires du bus d'interrogation linéaire par la centrale de gestion si celle-ci déduit la présence d'une rupture d'un des capteurs linéaires du bus d'interrogation linéaire en fonction de la première et la deuxième série de signaux de réponse reçues.

12. Procédé selon l'une quelconque des revendications 10 à 11, **caractérisé en ce que** le système comprend également au moins deux dérivations (B1N2, B1N3, B1N6), les au moins deux dérivations (B1N2, B1N3, B1N6) étant connectées sur le bus d'interrogation linéaire, un second bus d'interrogation linéaire (B2, B3) étant formé par une seconde pluralité de capteurs linéaires connectés en série entre eux, ledit second bus d'interrogation linéaire présentant une première et une deuxième extrémités et étant connecté aux au moins deux dérivations (B1N2, B1N3, B1N6) par ses deux extrémités,
pour chaque extrémité du second bus d'interrogation linéaire et pour chaque dérivation, le procédé comprend les étapes suivantes:
- envoi d'au moins un signal d'interrogation (E1, E2) à travers le second bus d'interrogation linéaire et réception d'au moins un signal de réponse (R1, R2) par la seconde pluralité de capteurs linéaires via ladite extrémité,
- transmission de l'au moins un signal de réponse reçu de la seconde pluralité de capteurs linéaires à la centrale de gestion (8) en passant par le bus d'interrogation linéaire (B1).

13. Produit programme d'ordinateur comprenant des instructions qui, lorsque le programme est exécuté par un ordinateur, conduisent celui-ci à mettre en œuvre les étapes du procédé selon l'une quelconque des revendications 9 à 12.

## Patentansprüche

1. System zur Erkennung von Flüssigkeitslecks, umfassend ein zentrales Steuergerät (8) und eine Vielzahl von Linearsensoren (500), die jeweils ein erstes und ein zweites Ende umfassen und in Reihe zusammengeschaltet sind,
wobei die Vielzahl der zusammengeschalteten Linearsensoren (5001 bis 5006) einen linearen Abfragebus bilden, der ein erstes und ein zweites Ende aufweist, wobei das zentrale Steuergerät für mindestens ein Ende des linearen Abfragebusses eingerichtet ist zum:
- Senden mindestens eines Abfragesignals (E1, E2) über den linearen Abfragebus und Empfangen mindestens eines Antwortsignals (R1, R2) durch die Vielzahl von Linearsensoren (5001 bis 5006) über das Ende, wobei die Kommunikation zwischen dem linearen Abfragebus und dem zentralen Steuergerät dann bidirektional erfolgt,
**dadurch gekennzeichnet, dass** der lineare Abfragebus durch seine beiden Enden (51, 52) mit dem zentralen Steuergerät verbunden ist,
und dass das zentrale Steuergerät außerdem dazu eingerichtet ist, mindestens eine erste Reihe von Antwortsignalen, die vom ersten Ende des linearen Abfragebusses erhalten wurden, zu vergleichen mit:
• einer zweiten Reihe von Antwortsignalen, die vom zweiten Ende des linearen Abfragebusses erhalten wurden, und/oder
• einer Liste mit Daten, die die Vielzahl der Linearsensoren kennzeichnen, wobei die Liste von dem zentralen Steuergerät gespeichert wird,
wobei das zentrale Steuergerät daraus auf das Vorhandensein oder Nichtvorhandensein einer Unterbrechung in einem der Linearsensoren des linearen Abfragebusses schließt.

2. System nach Anspruch 1, **dadurch gekennzeichnet, dass** das System mindestens ein Zubehörteil umfasst, das einer Abzweigleitung und/oder einem Stopfen und/oder einem Neutralleiter entspricht.

3. System nach Anspruch 2, **dadurch gekennzeichnet, dass** das zentrale Steuergerät dazu eingerichtet ist, eine erste Reihe von erhaltenen Antwortsignalen, die Daten von einem ersten Ende des linearen Abfragebusses und/oder von Zubehörteilen umfassen, zu vergleichen mit:
- einer Liste von Daten, die die Vielzahl von Linearsensoren und/oder Zubehörteilen kennzeichnen, die von dem zentralen Steuergerät gespeichert werden, und/oder
- einer zweiten Reihe von Antwortsignalen, die vom zweiten Ende des linearen Abfragebusses erhalten wurden und Daten umfassen, die die Linearsensoren und/oder die Zubehörteile kennzeichnen.

4. System nach Anspruch 1, **dadurch gekennzeichnet, dass** eine Position der Unterbrechung in einem der Linearsensoren des linearen Abfragebusses durch das zentrale Steuergerät definiert wird, wenn dieses in Abhängigkeit von der ersten und zweiten Reihe empfangener Antwortsignale auf das Vorhandensein einer Unterbrechung in einem der Linearsensoren des linearen Abfragebusses schließt.

5. System nach einem der Ansprüche 2 bis 4, **dadurch gekennzeichnet, dass** das System außerdem mindestens zwei Abzweigleitungen (B1N2, B1N3, B1N6) umfasst, wobei die mindestens zwei Abzweigleitungen (B1N2, B1N3, B1N6) auf dem linearen Abfragebus verbunden sind, wobei ein zweiter linearer Abfragebus (B2, B3) durch eine zweite Vielzahl von Linearsensoren gebildet wird, die in Reihe zusammengeschaltet sind, wobei der zweite lineare Abfragebus ein erstes und ein zweites Ende aufweist und an seinen beiden Enden mit den mindestens zwei Abzweigleitungen (B1N2, B1N3, B1N6) verbunden ist,
wobei für jedes Ende des zweiten linearen Abfragebusses jede Abzweigleitung angeordnet ist zum:
- Senden mindestens eines Abfragesignals (E1, E2) durch den zweiten linearen Abfragebus und Empfangen mindestens eines Antwortsignals (R1, R2) durch die zweite Vielzahl von Linearsensoren über das Ende, wobei jede Abzweigleitung auch dazu eingerichtet ist, das mindestens eine von der zweiten Vielzahl von Linearsensoren empfangene Antwortsignal über den linearen Abfragebus (B1) an das zentrale Steuergerät (8) zu übertragen.

6. System nach einem der Ansprüche 2 bis 5, **dadurch gekennzeichnet, dass** das mindestens eine Zubehörteil des Systems dazu eingerichtet ist, mindestens ein Antwortsignal zu übertragen, das außerdem spezifische Daten für das Zubehörteil umfasst.

7. System nach einem der vorstehenden Ansprüche, **dadurch gekennzeichnet, dass** jeder Linearsensor ein flüssigkeitsempfindliches Detektorelement (208) umfasst, wobei das Detektorelement bei Kontakt mit der Flüssigkeit eine Änderung seines spezifischen Widerstands aufweist.

8. System nach einem der vorstehenden Ansprüche, **dadurch gekennzeichnet, dass** die Vielzahl von Linearsensoren des linearen Abfragebusses einer Vielzahl von Linearsensoren entspricht, die empfindlich auf leitfähige Flüssigkeiten und/oder empfindlich auf nicht leitfähige Flüssigkeiten und/oder empfindlich auf Kohlenwasserstoffe reagieren.

9. Verfahren zum Erkennen von Flüssigkeitslecks in einem System, wobei das System ein zentrales Steuergerät (8) und eine Vielzahl von Linearsensoren (500) umfasst, die jeweils ein erstes und ein zweites Ende umfassen und in Reihe zusammengeschaltet sind,
wobei die Vielzahl der zusammengeschalteten Linearsensoren (5001 bis 5006) einen linearen Abfragebus bilden, der ein erstes und ein zweites Ende aufweist, wobei das Verfahren für mindestens ein Ende des linearen Abfragebusses die folgenden Schritte umfasst:
- Senden mindestens eines Abfragesignals (E1, E2) über den linearen Abfragebus und Empfangen mindestens eines Antwortsignals (R1, R2) durch die Vielzahl von Linearsensoren über das Ende,
wobei die Kommunikation des linearen Abfragebusses über die Vielzahl von Linearsensoren dann bidirektional erfolgt,
**dadurch gekennzeichnet, dass** der lineare Abfragebus durch seine beiden Enden (51, 52) mit dem zentralen Steuergerät verbunden ist,
und dass das Verfahren außerdem die folgenden Schritte umfasst:
- Vergleichen, durch das zentrale Steuergerät, von mindestens einer ersten Reihe von Antwortsignalen, die vom ersten Ende des linearen Abfragebusses erhalten wurden, mit:
• einer zweiten Reihe von Antworten, die von der Vielzahl von Linearsensoren von dem zweiten Ende des linearen Abfragebusses erhalten wurden, und/oder
• einer Liste mit Daten, die die Vielzahl der Linearsensoren kennzeichnen, wobei die Liste in dem zentralen Steuergerät gespeichert ist,
- Schließen auf das Vorhandensein oder Nichtvorhandensein einer Unterbrechung im linearen Abfragebus durch das zentrale Steuergerät.

10. Verfahren nach Anspruch 9, **dadurch gekennzeichnet, dass** das System mindestens ein Zubehörteil umfasst, das einer Abzweigleitung und/oder einem Stopfen und/oder einem Neutralleiter entspricht, wobei das Verfahren außerdem die folgenden Schritte umfasst:
- Vergleich, durch das zentrale Steuergerät, von mindestens einer ersten Reihe erhaltener Antwortsignale, die Daten von einem ersten Ende des linearen Abfragebusses und/oder der Zubehörteile umfassen, mit:
• einer Liste von Daten, die die Vielzahl von Linearsensoren und/oder Zubehörteilen kennzeichnen, die von dem zentralen Steuergerät gespeichert werden, und/oder
• einer zweiten Reihe von Antwortsignalen, die vom zweiten Ende des linearen Abfragebusses erhalten wurden und Daten umfassen, die die Linearsensoren und/oder die Zubehörteile kennzeichnen.

11. Verfahren nach Anspruch 9, **dadurch gekennzeichnet, dass** das Verfahren außerdem den folgenden Schritt umfasst:
- Bestimmen einer Position der Unterbrechung in einem der Linearsensoren des linearen Abfragebusses durch das zentrale Steuergerät, wenn dieses in Abhängigkeit von der ersten und zweiten Reihe empfangener Antwortsignale auf das Vorhandensein einer Unterbrechung in einem der Linearsensoren des linearen Abfragebusses schließt.

12. Verfahren nach einem der Ansprüche 10 bis 11, **dadurch gekennzeichnet, dass** das System außerdem mindestens zwei Abzweigleitungen (B1N2, B1N3, B1N6) umfasst, wobei die mindestens zwei Abzweigleitungen (B1N2, B1N3, B1N6) auf dem linearen Abfragebus verbunden sind, wobei ein zweiter linearer Abfragebus (B2, B3) durch eine zweite Vielzahl von Linearsensoren gebildet wird, die in Reihe zusammengeschaltet sind, wobei der zweite lineare Abfragebus ein erstes und ein zweites Ende aufweist und an seinen beiden Enden mit den mindestens zwei Abzweigleitungen (B1N2, B1N3, B1N6) verbunden ist,
wobei das Verfahren für jedes Ende des zweiten linearen Abfragebusses und für jede Abzweigleitung die folgenden Schritte umfasst:
- Senden mindestens eines Abfragesignals (E1, E2) über den zweiten linearen Abfragebus und Empfangen mindestens eines Antwortsignals (R1, R2) durch die zweite Vielzahl von Linearsensoren über das Ende,
- Übertragen des mindestens einen Antwortsignals, das von der zweiten Vielzahl von Linearsensoren empfangen wurde, an das zentrale Steuergerät (8) über den linearen Abfragebus (B1).

13. Computerprogrammprodukt, umfassend Anweisungen, die, wenn das Programm durch einen Computer ausgeführt wird, diesen dazu veranlassen, die Schritte des Verfahrens nach einem der Ansprüche 9 bis 12 zu implementieren.

## Claims

1. A system for detecting leaks of liquid, comprising a central management unit (8) and a plurality of linear sensors (500) each comprising a first end and a second end and which are connected to one another in series,
the plurality of linear sensors (5001 to 5006), connected together, form a linear query bus having a first and a second end,
the central management unit is designed to, the at least one end of the linear query bus:
- send at least one query signal (E1, E2) via the linear query bus and receive at least one response signal (R1, R2) from the plurality of linear sensors (5001 to 5006) via said end,
communication between the linear query bus and the central management unit being two-way in such a case,
**characterized in that** the linear query bus is connected at both ends (51, 52) to the central management unit,
and **in that** the central management unit is also arranged to compare at least one first series of response signals obtained by the first end of the linear query bus with:
• a second series of response signals obtained by the second end of the linear query bus, and/or,
• a list of data characterizing the plurality of linear sensors, said list being stored by said central management unit,
the central management unit by deducing the presence or absence of a break of one of the linear sensors on the linear query bus.

2. The system according to claim 1, **characterized in that** the system comprises at least one accessory corresponds to a branch and/or a terminator and/or a neutral cable.

3. The system according to claim 2, **characterized in that** the central management unit is arranged to compare a first series of response signals obtained comprising data from a first end of said linear query bus and/or accessories with:
- a list of data that characterize the plurality of linear sensors and/or accessories stored by said central management unit, and/or
- a second series of response signals obtained by the second end of the linear query bus, comprising data that characterize said linear sensors and/or accessories.

4. The system according to claim 1, **characterized in that** a position of said break of one of the linear sensors of the linear query bus is defined by the central management unit, if the central management unit deduces the presence of a break in one of the linear sensors of the linear query bus depending on the first and second series of response signals received.

5. The system according to any one of claims 2 to 4, **characterized in that** the system further comprises at least two branches (B1N2, B1N3, B1N6), the at least two branches (B1N2, B1N3, B1N6) being connected to the linear query bus, a second linear query bus (B2, B3) being formed by a second plurality of linear sensors connected in series with each other, said second linear query bus having a first and a second end and being connected to the at least two branches (B1N2, B1N3, B1N6) at both its ends,
for each end of the second linear query bus, each branch is arranged to:
- send at least one query signal (E1, E2) via the second linear query bus and receive at least one response signal (R1, R2) from the second plurality of linear sensors via said end,
each branch also being arranged to transmit the at least one response signal received from the second plurality of linear sensors to the central management unit (8) via the linear query bus (B1).

6. The system according to any one of claims 2 to 5, **characterized in that** the at least one accessory of the system is arranged to transmit at least one response signal further comprising an item of data specific to said accessory.

7. The system according to any of the preceding claims, **characterized in that** each linear sensor comprises a sensing member (208) sensitive to liquids, said sensing member having a change in resistivity when in contact with said liquid.

8. The system according to any of the preceding claims, **characterized in that** the plurality of linear sensors on the differential bus corresponds to a plurality of linear sensors sensitive to conductive liquids and/or sensitive to non-conductive liquids and/or sensitive to hydrocarbons.

9. A method for detecting leaks of liquid in a system, the system comprising a central management unit (8) and a plurality of linear sensors (500) each comprising a first end and a second end and which are connected to one another in series,
the plurality of linear sensors (5001 to 5006), connected together, form a linear query bus having a first and a second end,
for the at least one end of the linear query bus, the method comprising the following steps:
- sending at least one query signal (E1, E2) via the linear query bus and receiving at least one response signal (R1, R2) from the plurality of linear sensors via said end,
the communication of the linear query bus through the plurality of linear sensors is two-way in such a case,
**characterized in that** the linear query bus is connected at both its ends (51, 52) to the central management unit,
and **in that** the method further comprises the following steps:
- comparison by the central management unit of at least a first series of response signals obtained by the first end of the linear query bus with:
• a second series of responses obtained from the plurality of linear sensors via the second end of the linear query bus, and/or,
• a list of data characterizing the plurality of linear sensors, said list being stored by said central management unit,
- deduction by the central management unit of the presence or absence of a break in the linear query bus.

10. The method according to claim 9, **characterized in that** the system comprises at least one accessory corresponding to a branch and/or a terminator and/or a neutral cable, the method further comprising the following steps:
- comparison by the central management unit of at least one first series of response signals obtained comprising data from a first end of said linear query bus and/or accessories with:
• a list of data that characterize the plurality of linear sensors and/or accessories stored by said central management unit, and/or
• a second series of response signals obtained by the second end of the linear query bus, comprising data that characterize said linear sensors and/or accessories.

11. The method according to claim 9, **characterized in that** the method further comprises the following step:
- determination of a position of said break of one of the linear sensors of the linear query bus by the central management unit, if the central management unit deduces the presence of a break in one of the linear sensors of the linear query bus depending on the first and second series of response signals received.

12. The method according to any one of claims 10 to 11, **characterized in that** the system further comprises at least two branches (B1N2, B1N3, B1N6), the at least two branches (B1N2, B1N3, B1N6) being connected to the linear query bus, a second linear query bus (B2, B3) being formed by a second plurality of linear sensors connected in series with each other, said second linear query bus having a first and a second end and being connected to the at least two branches (B1N2, B1N3, B1N6) at both its ends,
for each end of the second linear query bus and for each branch, the method comprises the following steps:
- sending at least one query signal (E1, E2) via the second linear query bus and receiving at least one response signal (R1, R2) from the second plurality of linear sensors via said end,
- transmitting the at least one response signal received from the second plurality of linear sensors to the central management unit (8) via the linear query bus (B1).

13. A computer program product comprising instructions which, when the program is executed by a computer, cause the latter to implement the steps of the method according to any one of claims 9 to 12.
